# FASCICULE DE BREVET EUROPEEN

(11) **EP 4 042 562 B1**
(45) Date de publication et mention de la délivrance du brevet: **13.08.2025**
(21) Numéro de dépôt: 20775014.2
(22) Date de dépôt: 24.09.2020
(51) Int. Cl.: H02P 25/28, H02K 15/03, H02P 27/06

(54) **SYSTÈME D'ENTRAINEMENT D'UN DISPOSITIF DE COMPRESSION DE FLUIDE ET PROCÉDÉ D'ALIMENTATION ÉLECTRIQUE ASSOCIÉ**
ANTRIEBSSYSTEM EINES FLÜSSIGKEITSKOMPRESSIONSGERÄT UND EINES ZUGEHÖRIGEN ELEKTRISCHEN VERSORGUNGSVERFAHREN
DRIVE SYSTEM OF A FLUID COMPRESSION DEVICE AND ASSOCIATED ELECTRICAL SUPPLY PROCESS

(30) Priorité: 07.10.2019 FR 1911066
(43) Date de publication de la demande: 17.08.2022
(73) Titulaire: IFP Energies nouvelles, 92852 Rueil-Malmaison (FR)
(72) Inventeur: BATTISTON, Alexandre, 92852 Rueil-Malmaison Cedex (FR); KEFSI, Laid, 92852 Rueil-Malmaison Cedex (FR); SARABI, Siyamak, 92852 Rueil-Malmaison Cedex (FR)
(74) Mandataire: IFP Energies nouvelles
(86) Numéro de dépôt international: PCT/EP2020/076691
(87) Numéro de publication internationale: WO 2021/069222

(56) Documents cités:
- DE-C- 663 954
- GB-A- 1 000 475
- JP-A- H09 182 388
- JP-A- H09 182 389
- US-A1- 2002 047 766
- US-B1- 6 380 654

## Description

### DOMAINE TECHNIQUE

La présente invention concerne un système d'entraînement comportant un onduleur, une machine tournante électrique et un dispositif de commande, l'onduleur comportant une première entrée, une deuxième entrée et N sorties, chacune de la première entrée et de la deuxième entrée étant destinée à être connectée à une borne respective d'une source de courant continu, chaque sortie étant associée à une phase électrique respective, N étant un entier naturel supérieur ou égal à deux, la machine tournante comprenant un stator et un rotor mobile en rotation, relativement au stator, autour d'un axe de rotation, le stator comprenant N enroulements, chaque enroulement comportant une entrée et une sortie, l'entrée de chaque enroulement étant connectée à une sortie correspondante de l'onduleur, les sorties des enroulements du stator étant connectées en un point commun.

L'invention concerne également un procédé d'alimentation mis en œuvre par un tel système, et un ensemble de compression comprenant un tel système.

L'invention s'applique au domaine des machines tournantes électriques, en particulier pour une application aux turbomachines, en particulier à un compresseur ou turbocompresseur pour une application embarquée à bord d'un véhicule.

### ÉTAT DE LA TECHNIQUE ANTÉRIEURE

Un procédé classique tel que divulgué dans le document JP H09 182389 A de fabrication d'une machine tournante comprend la fixation, sur un corps de rotor, d'aimants permanents déjà magnétisés, le rotor étant ensuite disposé dans une cavité d'un stator correspondant.

Toutefois, un tel procédé présente de nombreux inconvénients. En particulier, lors de l'étape d'assemblage du rotor avec le stator, le rotor (qui comprend les aimants permanents déjà magnétisés) génère des forces magnétiques susceptibles d'entraîner des difficultés d'assemblage avec le stator, ainsi qu'un risque accru de chocs rotor/stator menant à un endommagement.

Pour surmonter de tels désagréments, il a été proposé de réaliser une machine tournante électrique en agençant, dans une cavité d'un stator, un rotor comprenant des éléments (dits « éléments magnétiques ») réalisés dans un matériau magnétique non magnétisé. En l'absence d'aimantation, le processus d'assemblage de la machine électrique est simplifié. Une fois ce montage réalisé, un champ magnétique est généré dans la cavité, au moyen d'enroulements dédiés montés dans le stator, pour magnétiser les éléments magnétiques du rotor.

Néanmoins, un tel procédé de fabrication ne donne pas entière satisfaction.

En effet, un tel procédé de fabrication requiert une structure dédiée à l'aimantation des éléments magnétiques du rotor, ce qui a un impact négatif sur l'encombrement et le coût de fabrication de la machine tournante.

En outre, la machine tournante obtenue par un tel procédé de fabrication n'est pas optimale dans le cadre d'une utilisation pour l'entraînement d'une turbomachine, en particulier d'un turbocompresseur pour véhicule. En effet, dans une telle application embarquée, la machine tournante n'est utilisée que de façon ponctuelle. Dans ce cas, lorsqu'elle n'est pas alimentée, la machine tournante génère un couple résistant à la rotation, ce qui entraîne des pertes à vide. Il existe donc une nécessité de pouvoir moduler la valeur du flux des éléments magnétiques, et notamment réduire, voire annuler le flux, dans les phases pendant lesquelles la machine n'est pas alimentée.

Un but de l'invention est donc de proposer un système d'entraînement qui soit plus simple et plus économique à réaliser, tout en générant moins de pertes lorsque la machine tournante qu'il comporte n'est pas sollicitée.

### EXPOSÉ DE L'INVENTION

L'invention est définie par les revendications jointes.

A cet effet, l'invention a pour objet un système d'entraînement du type précité, et comportant, en outre, un organe de commutation de sortie connecté entre le point commun et la deuxième entrée de l'onduleur,
le rotor comprenant au moins un élément magnétique réalisé dans un matériau à aimantation modulable,
le dispositif de commande étant configuré pour, simultanément, au cours d'une étape de magnétisation de chaque élément magnétique du rotor :
   - commander l'organe de commutation de sortie pour qu'il se trouve dans un état passant pendant un intervalle temporel de magnétisation prédéterminé ; et
   - commander l'onduleur pour, pendant l'intervalle temporel de magnétisation, connecter la première entrée de l'onduleur à au moins une et au plus N-1 sortie(s) de l'onduleur, formant chacune une sortie de magnétisation, et déconnecter la deuxième entrée de l'onduleur de chaque sortie de magnétisation.

En effet, dans un tel système d'entraînement, lors de l'étape de magnétisation, l'onduleur est commandé de sorte que le champ magnétique destiné à aimanter les éléments magnétiques soit généré par les enroulements du stator qui sont usuellement utilisés pour mettre le rotor en mouvement. La magnétisation des éléments magnétiques est donc rendue possible sans structure dédiée additionnelle, ce qui confère un avantage en poids et en coût de fabrication par rapport aux systèmes de l'état de la technique.

En outre, un tel système d'entraînement confère la faculté de modifier l'amplitude et/ou la direction de l'aimantation des éléments magnétiques du rotor en fonction des conditions opérationnelles. Plus précisément, dans le système d'entraînement selon l'invention, la direction et l'amplitude du champ magnétique généré par le stator dépendent du choix des sorties de magnétisation de l'onduleur. Or, un tel champ magnétique statorique a une influence sur l'aimantation des éléments magnétiques du rotor.

En particulier, lorsque le fonctionnement de la machine tournante électrique n'est plus requis pour entraîner le dispositif de compression de fluide, le système d'entraînement selon l'invention autorise avantageusement, grâce à un choix judicieux des sorties de magnétisation, l'application aux éléments magnétiques d'un champ magnétique ayant pour effet de modifier, notamment réduire sensiblement, voire d'annuler, l'aimantation desdits éléments magnétiques. De tels éléments magnétiques sont ainsi dits « à aimantation modulable ».

Il en résulte que la machine tournante, qui est mécaniquement couplée au dispositif de compression de fluide et est entraînée par celui-ci même lorsqu'elle n'est pas électriquement sollicitée, génère une force de freinage bien moindre qu'avec un système d'entraînement de l'état de la technique dépourvu d'onduleur configuré pour modifier l'aimantation des éléments magnétiques en fonction des conditions opérationnelles.

L'aimantation modulable est pertinente sur un turbocompresseur électrifié, dont le fonctionnement et les appels de puissance électriques en modes moteur et générateur sont transitoires (mode de fonctionnement impulsionnel). Le rotor rendu magnétiquement inerte lorsque le fonctionnement de la machine électrique tournante n'est plus requis limite donc les pertes du système d'entraînement lorsque ce dernier n'est pas utilisé, par rapport à un système d'entraînement de l'état de la technique.

Suivant d'autres aspects avantageux de l'invention, le système d'entraînement comporte une ou plusieurs des caractéristiques suivantes, prise(s) isolément ou suivant toutes les combinaisons techniquement possibles:
- le système d'entraînement comprend, en outre, une charge connectée en série entre l'organe de commutation de sortie et la deuxième entrée de l'onduleur ;
- la durée de l'intervalle temporel de magnétisation dépend du matériau à aimantation modulable et/ou du nombre de sorties de magnétisation ;
- la durée de l'intervalle temporel de magnétisation dépend, en outre, de l'impédance de la charge ;
- le dispositif de commande est, en outre, configuré pour, lors de l'étape de magnétisation :
   - détecter un champ magnétique généré par le rotor;
   - choisir chaque sortie de magnétisation en fonction du champ magnétique détecté ;
- le dispositif de commande est, en outre, configuré pour mettre en œuvre l'étape de magnétisation préalablement à une étape d'excitation de la machine tournante, le dispositif de commande étant configuré pour, lors de l'étape d'excitation, simultanément :
   - commander l'organe de commutation de sortie pour qu'il se trouve dans un état bloqué ; et
   - commander l'onduleur selon une loi de commande d'onduleur prédéterminée pour connecter, successivement au cours du temps, chaque sortie de l'onduleur à la première entrée et/ou la deuxième entrée de l'onduleur.

En outre, l'invention a pour objet un procédé d'alimentation d'une machine tournante électrique au moyen d'un onduleur, l'onduleur comportant une première entrée, une deuxième entrée et N sorties, chaque sortie étant associée à une phase électrique respective, N étant un entier naturel supérieur ou égal à deux,
la machine tournante comprenant un stator et un rotor agencé dans une cavité du stator et mobile en rotation, relativement au stator, autour d'un axe de rotation,
le stator comprenant N enroulements, chaque enroulement comportant une entrée et une sortie, l'entrée de chaque enroulement étant connectée à une sortie correspondante de l'onduleur, les sorties des enroulements étant connectées en un point commun,
le rotor comprenant au moins un élément magnétique réalisé dans un matériau à aimantation modulable,
un organe de commutation de sortie étant connecté entre le point commun et la deuxième entrée de l'onduleur,
le procédé d'alimentation comprenant une étape de magnétisation de chaque élément magnétique du rotor comportant :
   - la connexion de chacune de la première entrée et de la deuxième entrée à une borne respective d'une source de courant continu ;
   - la commande de l'organe de commutation de sortie pour qu'il se trouve dans un état passant pendant un intervalle temporel de magnétisation prédéterminé ; et
   - la commande de l'onduleur pour, pendant l'intervalle temporel de magnétisation, connecter la première entrée de l'onduleur à au moins une et au plus N-1 sortie(s) de l'onduleur, formant chacune une sortie de magnétisation, et déconnecter la deuxième entrée de l'onduleur de chaque sortie de magnétisation, de façon à injecter simultanément, dans chaque enroulement connecté à une sortie de magnétisation respective, un courant électrique pour générer, dans la cavité du stator, un champ magnétique destiné à magnétiser chaque un élément magnétique.

Suivant un autre aspect avantageux de l'invention, le procédé d'alimentation comporte une ou les caractéristique(s) suivante(s), prise(s) isolément ou en combinaison :
- le procédé d'alimentation comporte, en outre, lors de l'étape de magnétisation :
   - la détection d'un champ magnétique généré par le rotor ; et
   - le choix de chaque sortie de magnétisation en fonction du champ magnétique détecté ;
- le procédé d'alimentation comporte, en outre, une étape d'excitation de la machine tournante ultérieure à l'étape de magnétisation, et comprenant simultanément :
   - la commande de l'organe de commutation de sortie pour qu'il se trouve dans un état bloqué ;

En outre, l'invention a pour objet un ensemble de compression comprenant un dispositif de compression de fluide et un système d'entraînement tel que défini ci-dessus, le dispositif de compression de fluide étant couplé au stator de la machine tournante du système d'entraînement pour son entraînement.

Suivant un autre aspect avantageux de l'invention, l'ensemble de compression comporte la caractéristique suivante : le dispositif de compression de fluide est un turbocompresseur associant une turbine et un compresseur, notamment pour un moteur à combustion interne, ou une microturbine.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
la figure 1 est une représentation schématique d'un ensemble comprenant un système d'entraînement selon l'invention, associé à une source de courant continu ;
la figure 2 est une vue schématique en section d'une machine tournante du système d'entraînement de la figure 1, selon un plan transversal de la machine tournante selon un mode de réalisation de l'invention ;
la figure 3 est un schéma illustrant le circuit électrique de l'ensemble de la figure 1, pendant une étape de magnétisation durant laquelle du courant électrique est injecté dans un seul enroulement d'un stator de la machine tournante de la figure 2 ;
la figure 4 est une vue schématique en section du stator de la machine tournante de la figure 2, selon un plan transversal de la machine tournante, pendant l'étape de magnétisation de la figure 3 ;
la figure 5 est similaire à la figure 3, du courant électrique étant injecté dans deux enroulements du stator;
la figure 6 est similaire à la figure 4, le stator étant illustré pendant l'étape de magnétisation de la figure 5.

### DESCRIPTION DÉTAILLÉE

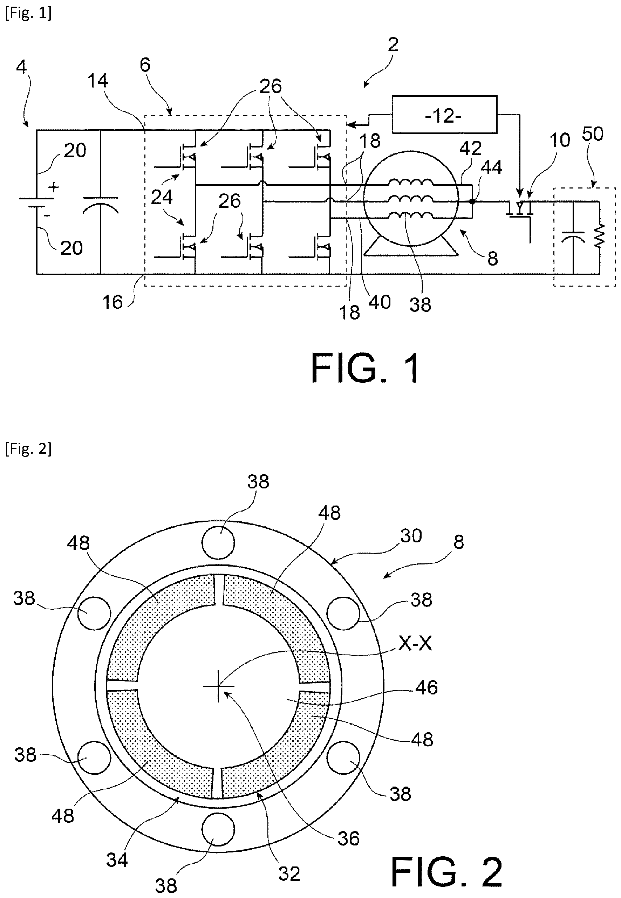

Un système d'entraînement 2 selon l'invention est illustré, de manière non limitative, par la figure 1. Sur cette figure, une source 4 de courant continu est connectée en entrée du système d'entraînement 2.

Le système d'entraînement 2 comporte un onduleur 6, une machine tournante 8 électrique, un organe de commutation de sortie 10 et un dispositif de commande 12. L'onduleur 6 est configuré pour acheminer du courant électrique depuis la source 4 vers des enroulements (décrits ultérieurement) de la machine tournante 8, et ce de façon sélective.

La machine tournante 8 est destinée à entraîner en rotation un élément connecté à son arbre de sortie, en particulier un dispositif de compression de fluide, par exemple un compresseur ou un turbocompresseur.

En outre, le dispositif de commande 12 est configuré pour commander l'onduleur 6 et l'organe de commutation de sortie 10.

L'onduleur 6 comporte une première entrée 14 et une deuxième entrée 16, ainsi que N sorties 18. N est un entier naturel supérieur ou égal à deux, par exemple égal à 3, comme illustré par la figure.

Les entrées 14, 16 de l'onduleur 6 forment les entrées du système d'entraînement 2. Chacune de la première et de la deuxième entrée 14, 16 est destinée à être connectée à une borne 20 respective de la source 4. En outre, chaque sortie 18 est associée à une phase électrique respective, et est raccordée à un enroulement correspondant de la machine tournante 8.

Suivant un exemple de structure, l'onduleur 6 comporte N bras 22, chaque bras 22 étant connecté entre la première entrée 14 et la deuxième entrée 16 de l'onduleur 6.

Chaque bras 22 est associé à une sortie 18 de l'onduleur 6, et comprend deux demi-bras 24 en série, connectées entre elles en un point de connexion formant la sortie 18 correspondant audit bras 22.

Chaque demi-bras 24 comporte un module de commutation 26 propre à commuter entre un état bloqué empêchant la circulation de courant électrique, et un état passant permettant la circulation d'un courant électrique.

Par exemple, les modules de commutation 26 de l'onduleur 6 sont des transistors bipolaires à grille isolée, également appelés IGBT (de l'anglais *« Insulated Gate Bipolar Transistor »)* ou des transistors à effet de champ à grille métal-oxyde, également appelés MOSFET (de l'anglais « *Metal Oxide Semiconductor Field Effect Transistor* »).

Comme illustré par la figure 2, de manière schématique et non limitative, la machine tournante 8 comprend un stator 30 et un rotor 32 mobile en rotation, relativement au stator 30, autour d'un axe de rotation X-X.

Plus précisément, le stator 30 comprend une cavité 34 dans laquelle est agencé le rotor 32.

L'arbre de sortie 36 de la machine tournante 8, mentionné précédemment, s'étend le long de l'axe de rotation X-X et est solidaire du rotor 32 pour être entraîné en rotation autour de l'axe de rotation X-X.

Le stator 3 comprend N enroulements 38, agencés de façon connue pour générer un champ magnétique dans la cavité 34 lorsqu'ils sont traversés par un courant électrique.

Par exemple, les enroulements 38 sont agencés de sorte que les champs magnétiques correspondant à deux enroulements 38 distincts soient images l'un de l'autre par une rotation d'un angle non nul multiple de 360°/N.

Le champ magnétique généré par les enroulements 38 est, notamment, destiné à former un champ magnétique d'excitation pour mettre le rotor 32 en rotation autour de l'axe de rotation X-X.

Comme cela sera décrit ultérieurement, le champ magnétique généré par les enroulements 38 est également destiné à former un champ magnétique de magnétisation pour magnétiser au moins un élément magnétique 48 (par exemple des inserts) du rotor 32 préalablement à sa mise en rotation.

Chaque enroulement 38 comporte une entrée 40 et une sortie 42.

L'entrée 40 de chaque enroulement 38 est connectée à une sortie 18 correspondante de l'onduleur 6. En outre, les sorties 42 des enroulements 38 sont connectées en un point commun 44, appelé point neutre de la machine tournante 8.

Le rotor 32 comprend au moins un élément magnétique 48 réalisé dans un matériau à aimantation modulable.

Par « matériau à aimantation modulable », il est entendu, au sens de la présente invention, un matériau ferromagnétique, de préférence un matériau ferromagnétique doux, ou encore un matériau ferromagnétique mi-dur.

Un matériau ferromagnétique doux (en anglais « *soft magnetic material* ») est un matériau ferromagnétique présentant un champ coercitif inférieur à 1000 A.m⁻¹ (ampère par mètre).

En outre, un matériau ferromagnétique mi-dur (en anglais « *semi-hard magnetic material* ») est un matériau ferromagnétique présentant un champ coercitif compris entre 1000 A.m⁻¹ et 100000 A.m⁻¹, par exemple entre 1000 A.m⁻¹ et 10000 A.m⁻¹.

Un tel matériau est, par exemple, un alliage dit FeCrCo comprenant du fer, du chrome et du cobalt, ou encore un alliage dit AlNiCo comprenant de l'aluminium, du nickel et du cobalt.

Par exemple, chaque élément magnétique 48 est un insert solidaire d'un corps 46 du rotor 32. Par exemple, chaque insert 48 est intégré dans le corps 46, ou encore agencé en périphérie du corps 46.

Dans ce cas, le rotor 32 comporte avantageusement une pluralité d'inserts 48 agencés circonférentiellement autour de l'axe de rotation X-X, de préférence à intervalle angulaire régulier.

De préférence, chaque insert 48 s'étend le long de l'axe de rotation X-X.

Selon une variante non représentée, l'élément magnétique forme tout ou partie du corps du rotor 32. Selon un aspect, l'élément magnétique peut prendre la forme d'un anneau. Dans la suite de la description, seule la première variante est décrite (magnétisation modulable d'inserts), mais l'invention est identique pour un rotor formé au moins partiellement d'un tel élément magnétique.

L'organe de commutation de sortie 10 est connecté entre le point commun 44 et la deuxième entrée 16 de l'onduleur 6.

L'organe de commutation de sortie 10 est propre à commuter entre un état bloqué empêchant la circulation de courant électrique, et un état passant permettant la circulation d'un courant électrique.

Par exemple, l'organe de commutation de sortie 10 est un transistor MOSFET ou un relais. Comme décrit précédemment, le dispositif de commande 12 est configuré pour commander l'onduleur 6 et l'organe de commutation de sortie 10. En particulier, le dispositif de commande 12 est configuré pour commander l'onduleur 6 afin de connecter sélectivement les sorties 18 de l'onduleur 6 à la première entrée 14 et/ou la deuxième entrée 16 de l'onduleur 6. En outre, le dispositif de commande 12 est configuré pour commander l'état passant ou bloqué de l'organe de commutation de sortie 10.

Plus précisément, le dispositif de commande 12 est configuré pour, au cours d'une étape de magnétisation de chaque élément magnétique 48 du rotor 32, commander l'onduleur 6 et l'organe de commutation de sortie 10 de façon à faire circuler un courant électrique continu à travers au moins un et au plus N-1 enroulement(s) 38 du stator 30. Dans le cas où le courant électrique est injecté dans deux ou plus enroulements 38, une telle injection est simultanée.

En particulier, le dispositif de commande 12 est configuré pour, simultanément, au cours de l'étape de magnétisation :
- commander l'organe de commutation de sortie 10 pour qu'il se trouve dans un état passant pendant un intervalle temporel de magnétisation prédéterminé ; et
- commander l'onduleur 6 pour, pendant l'intervalle temporel de magnétisation, connecter la première entrée 14 de l'onduleur 6 à au moins une et au plus N-1 sortie(s) 18 de l'onduleur 6, formant chacune une sortie de magnétisation, et déconnecter la deuxième entrée 16 de l'onduleur 6 de chaque sortie de magnétisation.

Une telle commande de l'onduleur 6 et de l'organe de commutation de sortie 10 empêche la circulation de courant électrique, à travers l'onduleur 6, entre la deuxième entrée 16 de l'onduleur 6 et chaque sortie de magnétisation. Dans ce cas, le courant électrique est contraint de circuler depuis la première entrée 14 vers la deuxième entrée 16 de l'onduleur à travers les enroulements 38 et l'organe de commutation de sortie 10. Ceci se traduit par la circulation d'une impulsion de courant à travers les enroulements connectés à ou aux sortie(s) 18 de magnétisation, et la génération d'un champ magnétique dans la cavité 34 destiné à magnétiser chaque élément magnétique 48.

De préférence, la durée de l'intervalle temporel de magnétisation est choisie en fonction du matériau dans lequel est réalisé chaque élément magnétique 48. En effet, l'intervalle temporel de magnétisation correspond à l'intervalle temporel pendant lequel chaque élément magnétique 48 est exposé, pendant l'étape de magnétisation, au champ magnétique destiné à entraîner sa magnétisation. Pour une amplitude donnée d'un tel champ magnétique, la durée de l'intervalle temporel de magnétisation est choisie pour assurer une magnétisation de chaque élément magnétique 48.

De préférence encore, la durée de l'intervalle temporel de magnétisation est également choisie en fonction du nombre de sorties de magnétisation. En effet, l'amplitude du courant traversant chaque enroulement 38, pendant l'étape de magnétisation, décroît avec le nombre d'enroulements 38 alimentés. Pour un nombre donné d'enroulements 38 alimentés en courant électrique, la durée de l'intervalle temporel de magnétisation est choisie pour assurer une magnétisation de chaque élément magnétique 48.

Les enroulements 38 étant agencés de façon à générer des champs magnétiques suivant des directions différentes, il en résulte que l'amplitude du champ magnétique total dans la cavité 34 décroît également avec le nombre d'enroulements 38 alimentés, ce qui se traduit par un accroissement de la durée minimale permettant une magnétisation de chaque élément magnétique 48, c'est-à-dire de la durée minimale de l'intervalle temporel de magnétisation.

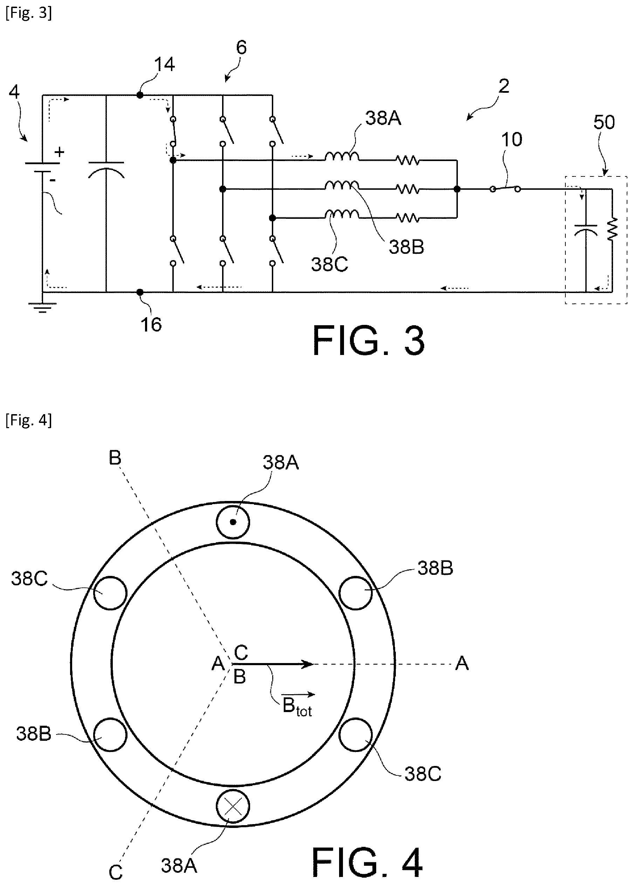

Dans l'exemple illustré par la figure 3, la machine tournante 8 est une machine triphasée, et l'onduleur 6 est commandé de sorte que, pendant l'étape de magnétisation, un seul enroulement, noté 38A, soit traversé par le courant électrique délivré par la source 4, dont le trajet est illustré par des flèches. Les deux autres enroulements, notés respectivement 38B et 38C, sont déconnectés de la première entrée 14 de l'onduleur 6 et ne sont pas alimentés en courant électrique. Dans ce cas, le courant traversant l'enroulement 38A présente une intensité iₘ.

Dans cet exemple, et comme cela est illustré par la figure 4, l'enroulement 38A génère, suivant un axe A-A associé à l'enroulement 38A, un champ magnétique total B̅ₜ̅ₒ̅ₜ̅ d'amplitude Bₘ dépendant de l'intensité iₘ du courant. En outre, aucun champ magnétique n'est généré selon les directions B-B et C-C, associées respectivement aux enroulements 38B et 38C. Il en résulte, pour une amplitude Bₘ suffisante du champ magnétique et une durée suffisante de l'intervalle temporel de magnétisation, l'apparition d'une aimantation au sein de chaque élément magnétique 48, qui perdure à l'issue de l'intervalle temporel de magnétisation.

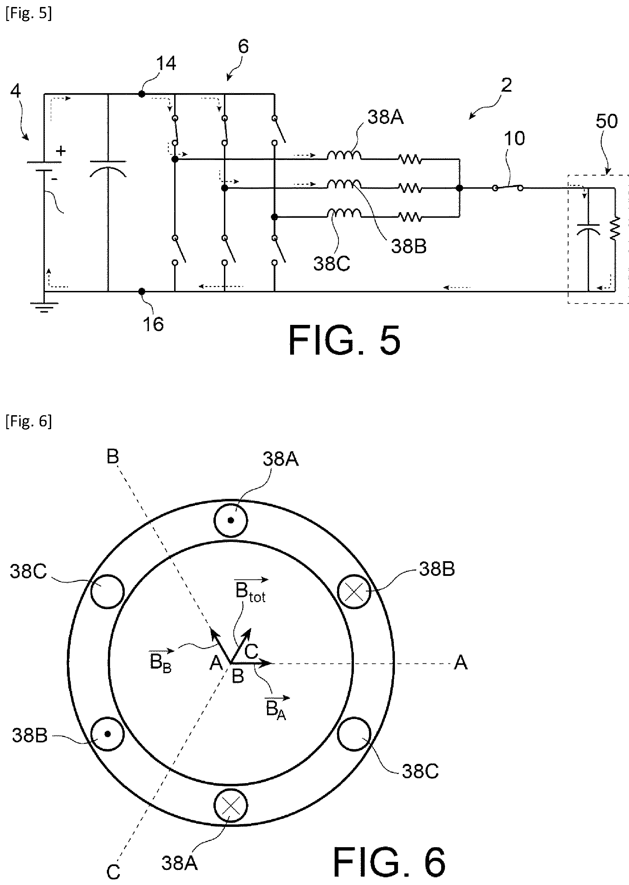

Dans l'exemple illustré par la figure 5, la machine tournante 8 est une machine triphasée, et l'onduleur 6 est commandé de sorte que, pendant l'étape de magnétisation, les enroulements 38A et 38B soient traversés par le courant électrique délivré par la source 4, dont le trajet est illustré par des flèches. L'enroulement 38C est déconnecté de la première entrée 14 de l'onduleur 6 et n'est pas alimenté en courant électrique. Dans ce cas, le courant traversant chacun des enroulements 38A, 38B présente une intensité iₘ/2. Dans cet exemple, et comme cela est illustré par la figure 6, l'enroulement 38A génère, suivant l'axe A-A, un champ magnétique d'amplitude Bₘ/2. En outre, l'enroulement 38B génère, suivant l'axe B-B, un champ magnétique d'amplitude Bₘ/2. Les champs magnétiques générés par les enroulements 38A, 38B étant à 120° l'un de l'autre, le champ magnétique total B̅ₜ̅ₒ̅ₜ̅ présente une amplitude de Bₘ/2. Il en résulte, pour une durée suffisante de l'intervalle temporel de magnétisation, l'apparition d'une aimantation au sein de chaque élément magnétique 48, qui perdure à l'issue de l'intervalle temporel de magnétisation.

L'amplitude du champ magnétique total du premier exemple des figures 3, 4 étant supérieure à celle du champ magnétique total du deuxième exemple des figures 5, 6, la durée minimale de l'intervalle temporel de magnétisation du premier exemple est inférieure ou égale à la durée minimale de l'intervalle temporel de magnétisation du deuxième exemple.

Il est à noter que, sur les figures 4, 6, le stator 30 comprend un seul pôle par enroulement 38. Toutefois, un nombre plus élevé de pôles par enroulement 38 est envisageable.

En outre, le dispositif de commande 12 est avantageusement configuré pour mettre en œuvre l'étape de magnétisation préalablement à une étape d'excitation de la machine tournante 6. Une telle étape d'excitation comprend la commande de l'onduleur 6 de façon à injecter, dans les enroulements 38 du stator 30, du courant électrique pour générer, dans la cavité 34, un champ magnétique d'excitation destiné à entraîner la rotation du rotor 32 autour de l'axe de rotation X-X.

Plus précisément, le dispositif de commande 12 est configuré pour, au cours de l'étape d'excitation, simultanément :
- commander l'organe de commutation de sortie 10 pour qu'il se trouve dans un état bloqué ; et
- commander l'onduleur 6 selon une loi de commande d'onduleur prédéterminée (commande par modulation de largeur d'impulsion par exemple) pour connecter, successivement au cours du temps, la première entrée 14 et la deuxième entrée 16 de l'onduleur 6 à chacune des sorties 18 de l'onduleur 6.

Une telle étape d'excitation a pour but de provoquer la rotation du rotor 32 autour de son axe X-X. Ceci est rendu possible par la présence d'une aimantation au sein des éléments magnétiques 48 du rotor 32, due à la mise en œuvre de l'étape de magnétisation précédemment décrite.

De façon optionnelle, le système d'entraînement 2 comprend, en outre, une charge 50 connectée en série entre l'organe de commutation de sortie 10 et la deuxième entrée 16 de l'onduleur 6. Une telle charge 50 comprend, par exemple, un condensateur et une résistance montés en parallèle.

Dans ce cas, l'intensité du courant traversant circulant dans l'onduleur 6 et les enroulements 38 pendant l'étape de magnétisation est également fonction de l'impédance de la charge 50.

L'ajout d'une telle charge 50 est avantageux, dans la mesure où l'intensité du courant pendant l'étape de magnétisation est réduite par rapport à celle du courant qui circulerait en l'absence de charge. Les composants de l'onduleur 6 et du stator 30 sont moins susceptibles d'être endommagés par des surintensités.

Le fonctionnement du système d'entraînement 2 va maintenant être décrit.

Au cours d'une étape de montage de la machine tournante 8, les éléments magnétiques 48 du rotor 32 ne présentent aucune aimantation, et le rotor 32 est agencé dans la cavité 34 du stator 30.

En outre, au cours d'une étape d'assemblage du système d'entraînement 2, l'entrée 40 de chaque enroulement 38 du stator 30 est connectée à une sortie 18 correspondante de l'onduleur 6. Le point commun 44 est connecté à la deuxième entrée 16 par le biais de l'organe de commutation de sortie 10.

Puis, chacune de la première entrée 14 et de la deuxième entrée 16 de l'onduleur 6 est connectée à une borne respective de la source 4 de courant continu.

Puis, au cours de l'étape de magnétisation de chaque élément magnétique 48 du rotor 32, le dispositif de commande 12 commande l'organe de commutation de sortie 10 pour qu'il se trouve dans son état passant pendant l'intervalle temporel de magnétisation prédéterminé. En outre, l'organe de commande 12 commande l'onduleur 6 pour, pendant l'intervalle temporel de magnétisation, connecter la première entrée 14 de l'onduleur à la ou chaque sortie de magnétisation, et déconnecter la deuxième entrée 16 de l'onduleur 6 de chaque sortie de magnétisation. De cette façon, la circulation de courant électrique, directement à travers l'onduleur 6, entre la deuxième entrée 16 de l'onduleur et chaque sortie de magnétisation est empêchée. Il en résulte qu'un courant électrique est injecté simultanément dans chaque enroulement 38 connecté à une sortie de magnétisation respective, en vue de générer, dans la cavité 34 du stator 30, un champ magnétique destiné à magnétiser chaque élément magnétique 48.

Puis, lors de l'étape d'excitation de la machine tournante 8, ultérieure à l'étape de magnétisation, le dispositif de commande 12 commande simultanément :
- l'organe de commutation de sortie 10 pour qu'il soit dans un état bloqué ; et
- l'onduleur 6 selon une loi de commande d'onduleur prédéterminée pour connecter, successivement au cours du temps, la première entrée 14 et la deuxième entrée 16 de l'onduleur 6 à chacune des sorties 18 de l'onduleur de façon à injecter des courants d'excitation dans chacun des enroulements 38 du stator 30 en vue de générer, dans la cavité 34 du stator 30, un champ magnétique tournant destiné à entraîner le rotor 32 en rotation autour de l'axe de rotation X-X.

En variante, le dispositif de commande 12 comporte également un moyen de détection d'un champ magnétique généré par le rotor 32, ledit champ magnétique ayant pour origine l'aimantation des éléments magnétiques 48. Dans ce cas, le dispositif de commande 12 est également configuré pour, notamment après l'étape d'excitation de la machine tournante 8, mettre en œuvre une étape de magnétisation additionnelle, qui diffère de l'étape de magnétisation décrite précédemment uniquement en ce que le dispositif de commande 12 réalise, en outre :
- une détection du champ magnétique généré par le rotor 32 ;
- un choix de chaque sortie de magnétisation en fonction du champ magnétique détecté. Une telle caractéristique est avantageuse, dans la mesure un choix judicieux des sorties de magnétisation conduit à la génération, au moyen du stator, d'un champ magnétique destiné à moduler, en particulier à réduire, voire à annuler, l'aimantation des éléments magnétiques 48. Ceci a pour effet de réduire les pertes dues à la machine tournante 8 lorsque ladite machine tournante 8 n'est plus requise pour entraîner, par rapport à une situation où une telle modulation de l'aimantation des éléments magnétiques ne serait pas mise en œuvre.

## Revendications

1. Système d'entraînement (2) comportant un onduleur (6), une machine tournante (8) électrique et un dispositif de commande (12),
l'onduleur (6) comportant une première entrée (14), une deuxième entrée (16) et N sorties (18), chacune de la première entrée (14) et de la deuxième entrée (16) étant destinée à être connectée à une borne respective d'une source (4) de courant continu, chaque sortie (18) étant associée à une phase électrique respective, N étant un entier naturel supérieur ou égal à deux,
la machine tournante (8) comprenant un stator (30) et un rotor (32) mobile en rotation, relativement au stator (30), autour d'un axe de rotation (X-X), le stator (30) comprenant N enroulements (38), chaque enroulement (38) comportant une entrée (40) et une sortie (42), l'entrée (40) de chaque enroulement (38) étant connectée à une sortie (18) correspondante de l'onduleur (6), les sorties (42) des enroulements (38) du stator (30) étant connectées en un point commun (44),
le système d'entraînement (2) étant **caractérisé en ce qu'**il comporte, en outre, un organe de commutation de sortie (10) connecté entre le point commun (44) et la deuxième entrée (16) de l'onduleur (6),
le rotor (32) comprenant au moins un élément magnétique (48) réalisé dans un matériau à aimantation modulable, notamment en matériau ferromagnétique doux ou mi-dur,
le dispositif de commande (12) étant configuré pour, simultanément, au cours d'une étape de magnétisation de chaque élément magnétique (48) du rotor (32) :
- commander l'organe de commutation de sortie (10) pour qu'il se trouve dans un état passant pendant un intervalle temporel de magnétisation prédéterminé ; et
- commander l'onduleur (6) pour, pendant l'intervalle temporel de magnétisation, connecter la première entrée (14) de l'onduleur (6) à au moins une et au plus N-1 sortie(s) (18) de l'onduleur (6), formant chacune une sortie de magnétisation, et déconnecter la deuxième entrée (16) de l'onduleur de chaque sortie de magnétisation (18), ledit dispositif de commande (12) étant, en outre, configuré pour mettre en œuvre l'étape de magnétisation préalablement à une étape d'excitation de la machine tournante, le dispositif de commande (12) étant configuré pour, lors de l'étape d'excitation, simultanément :
- commander l'organe de commutation de sortie (10) pour qu'il se trouve dans un état bloqué ; et
- commander l'onduleur (6) selon une loi de commande d'onduleur prédéterminée pour connecter, successivement au cours du temps, chaque sortie (18) de l'onduleur (6) à la première entrée (14) et/ou la deuxième entrée (16) de l'onduleur (6).

2. Système d'entraînement (2) selon la revendication 1, comprenant, en outre, une charge (52) connectée en série entre l'organe de commutation de sortie (10) et la deuxième entrée (16) de l'onduleur (6).

3. Système d'entraînement (2) selon la revendication 1 ou 2, dans lequel la durée de l'intervalle temporel de magnétisation dépend du matériau à aimantation modulable et/ou du nombre de sorties (18) de magnétisation.

4. Système d'entraînement (2) selon la revendication 3 lorsqu'elle dépend de la revendication 2, dans lequel la durée de l'intervalle temporel de magnétisation dépend, en outre, de l'impédance de la charge (52).

5. Système d'entraînement (2) selon l'une quelconque des revendications 1 à 4, dans lequel le dispositif de commande (12) est, en outre, configuré pour, lors de l'étape de magnétisation :
- détecter un champ magnétique généré par le rotor (32) ;
- choisir chaque sortie de magnétisation en fonction du champ magnétique détecté.

6. Procédé d'alimentation d'une machine tournante (8) électrique au moyen d'un onduleur (6), l'onduleur (6) comportant une première entrée (14), une deuxième entrée (16) et N sorties (18), chaque sortie (18) étant associée à une phase électrique respective, N étant un entier naturel supérieur ou égal à deux,
la machine tournante (8) comprenant un stator (30) et un rotor (32) agencé dans une cavité (34) du stator (30) et mobile en rotation, relativement au stator (30), autour d'un axe de rotation (X-X),
le stator (30) comprenant N enroulements (38), chaque enroulement (38) comportant une entrée (40) et une sortie (42), l'entrée (40) de chaque enroulement (38) étant connectée à une sortie (18) correspondante de l'onduleur (6), les sorties (42) des enroulements (38) étant connectées en un point commun (44),
le rotor (32) comprenant au moins un élément magnétique (48) réalisé dans un matériau à aimantation modulable, notamment en matériau ferromagnétique doux ou mi-dur,
un organe de commutation de sortie (10) étant connecté entre le point commun (44) et la deuxième entrée (16) de l'onduleur (6),
le procédé d'alimentation comprenant une étape de magnétisation de chaque élément magnétique (48) du rotor (32) comportant :
- la connexion de chacune de la première entrée (14) et de la deuxième entrée (16) à une borne respective d'une source (4) de courant continu ;
- la commande de l'organe de commutation de sortie (10) pour qu'il se trouve dans un état passant pendant un intervalle temporel de magnétisation prédéterminé ; et
- la commande de l'onduleur (6) pour, pendant l'intervalle temporel de magnétisation, connecter la première entrée (14) de l'onduleur à au moins une et au plus N-1 sortie(s) (18) de l'onduleur (6), formant chacune une sortie de magnétisation, et déconnecter la deuxième entrée (16) de l'onduleur (6) de chaque sortie de magnétisation, de façon à injecter simultanément, dans chaque enroulement (38) connecté à une sortie de magnétisation respective, un courant électrique pour générer, dans la cavité (34) du stator (30), un champ magnétique destiné à magnétiser chaque un élément magnétique (48), ledit procédé comprenant en outre une étape d'excitation de la machine tournante ultérieure à l'étape de magnétisation, et comprenant simultanément :
- la commande de l'organe de commutation de sortie (10) pour qu'il se trouve dans un état bloqué ; et
- la commande de l'onduleur (6) selon une loi de commande d'onduleur prédéterminée pour connecter, successivement au cours du temps, chaque sortie (18) de l'onduleur (6) à la première entrée (14) et/ou la deuxième entrée (16) de l'onduleur (6), de façon à injecter du courant électrique dans les enroulements (38) du stator (30) pour générer, dans la cavité (34) du stator (30), un champ magnétique tournant destiné à entraîner le rotor (32) en rotation autour de l'axe de rotation (X-X).

7. Procédé d'alimentation selon la revendication 6, comportant, en outre, lors de l'étape de magnétisation :
- la détection d'un champ magnétique généré par le rotor (32) ; et
- le choix de chaque sortie de magnétisation en fonction du champ magnétique détecté.

8. Ensemble de compression comprenant un dispositif de compression de fluide et un système d'entraînement selon l'une quelconque des revendications 1 à 5, le dispositif de compression de fluide étant couplé au stator de la machine tournante (8) du système d'entraînement (2) pour son entraînement.

9. Ensemble de compression selon la revendication 8, dans lequel ledit dispositif de compression de fluide est un turbocompresseur associant une turbine et un compresseur, notamment pour un moteur à combustion interne, ou une microturbine.

## Patentansprüche

1. Antriebssystem (2), das einen Wechselrichter (6), eine rotierende elektrische Maschine (8) und eine Steuereinrichtung (12) aufweist,
wobei der Wechselrichter (6) einen ersten Eingang (14), einen zweiten Eingang (16) und N Ausgänge (18) aufweist, wobei sowohl der erste Eingang (14) als auch der zweite Eingang (16) dazu bestimmt sind, mit einem jeweiligen Anschluss einer Gleichstromquelle (4) verbunden zu werden, wobei jeder Ausgang (18) einer jeweiligen elektrischen Phase zugeordnet ist, wobei N eine natürliche ganze Zahl größer oder gleich zwei ist,
wobei die rotierende Maschine (8) einen Stator (30) und einen relativ zum Stator (30) um eine Rotationsachse (X-X) drehbeweglichen Rotor (32) umfasst, wobei der Stator (30) N Wicklungen (38) umfasst, wobei jede Wicklung (38) einen Eingang (40) und einen Ausgang (42) aufweist, wobei der Eingang (40) jeder Wicklung (38) mit einem entsprechenden Ausgang (18) des Wechselrichters (6) verbunden ist, wobei die Ausgänge (42) der Wicklungen (38) des Stators (30) an einem gemeinsamen Punkt (44) verbunden sind,
wobei das Antriebssystem (2) **dadurch gekennzeichnet ist, dass** es außerdem ein Ausgangsschaltorgan (10) aufweist, das zwischen den gemeinsamen Punkt (44) und den zweiten Eingang (16) des Wechselrichters (6) geschaltet ist,
wobei der Rotor (32) mindestens ein magnetisches Element (48) umfasst, das aus einem Werkstoff mit veränderbarer Magnetisierung hergestellt ist, insbesondere aus einem weichen oder mittelharten ferromagnetischen Werkstoff,
wobei die Steuereinrichtung (12) dafür ausgelegt ist, gleichzeitig in einem Magnetisierungsschritt für jedes magnetische Element (48) des Rotors (32):
- das Ausgangsschaltorgan (10) so zu steuern, dass es sich während eines vorbestimmten Magnetisierungszeitraums in einem Durchlasszustand befindet; und
- den Wechselrichter (6) zu steuern, um während des Magnetisierungszeitraums den ersten Eingang (14) des Wechselrichters (6) mit mindestens einem und höchstens N-1 Ausgang (Ausgängen) (18) des Wechselrichters (6) zu verbinden, die jeweils einen Magnetisierungsausgang bilden, und den zweiten Eingang (16) des Wechselrichters von jedem Magnetisierungsausgang (18) zu trennen, wobei die Steuereinrichtung (12) außerdem dafür ausgelegt ist, den Magnetisierungsschritt vor einem Schritt der Erregung der rotierenden Maschine auszuführen, wobei die Steuereinrichtung (12) dafür ausgelegt ist, in dem Erregungsschritt gleichzeitig:
- das Ausgangsschaltorgan (10) so zu steuern, dass es sich in einem gesperrten Zustand befindet; und
- den Wechselrichter (6) nach einer vorbestimmten Steuerungsart für den Wechselrichter zu steuern, um im Zeitverlauf nacheinander jeden Ausgang (18) des Wechselrichters (6) mit dem ersten Eingang (14) und/oder dem zweiten Eingang (16) des Wechselrichters (6) zu verbinden.

2. Antriebssystem (2) nach Anspruch 1, welches außerdem eine Last (52) umfasst, die zwischen das Ausgangsschaltorgan (10) und den zweiten Eingang (16) des Wechselrichters (6) in Reihe geschaltet ist.

3. Antriebssystem (2) nach einem der Ansprüche 1 oder 2, wobei die Dauer des Magnetisierungszeitraums von dem Werkstoff mit veränderbarer Magnetisierung und/oder der Anzahl der Magnetisierungsausgänge (18) abhängt.

4. Antriebssystem (2) nach Anspruch 3, wenn abhängig von Anspruch 2, wobei die Dauer des Magnetisierungszeitraums außerdem von der Impedanz der Last (52) abhängt.

5. Antriebssystem (2) nach einem der Ansprüche 1 bis 4, wobei die Steuereinrichtung (12) außerdem dafür ausgelegt ist, im Magnetisierungsschritt:
- ein Magnetfeld zu erfassen, das vom Rotor (32) erzeugt wird;
- jeden Magnetisierungsausgang in Abhängigkeit von dem erfassten Magnetfeld zu wählen.

6. Verfahren zur Versorgung einer rotierenden elektrischen Maschine (8) mithilfe eines Wechselrichters (6), wobei der Wechselrichter (6) einen ersten Eingang (14), einen zweiten Eingang (16) und N Ausgänge (18) aufweist, wobei jeder Ausgang (18) einer jeweiligen elektrischen Phase zugeordnet ist, wobei N eine natürliche ganze Zahl größer oder gleich zwei ist,
wobei die rotierende Maschine (8) einen Stator (30) und einen Rotor (32), der in einem Hohlraum (34) des Stators (30) angeordnet und relativ zum Stator (30) um eine Rotationsachse (X-X) drehbeweglich ist, umfasst,
wobei der Stator (30) N Wicklungen (38) umfasst, wobei jede Wicklung (38) einen Eingang (40) und einen Ausgang (42) aufweist, wobei der Eingang (40) jeder Wicklung (38) mit einem entsprechenden Ausgang (18) des Wechselrichters (6) verbunden ist, wobei die Ausgänge (42) der Wicklungen (38) an einem gemeinsamen Punkt (44) verbunden sind,
wobei der Rotor (32) mindestens ein magnetisches Element (48) umfasst, das aus einem Werkstoff mit veränderbarer Magnetisierung hergestellt ist, insbesondere aus einem weichen oder mittelharten ferromagnetischen Werkstoff,
wobei ein Ausgangsschaltorgan (10) zwischen den gemeinsamen Punkt (44) und den zweiten Eingang (16) des Wechselrichters (6) geschaltet ist,
wobei das Versorgungsverfahren einen Magnetisierungsschritt für jedes magnetische Element (48) des Rotors (32) umfasst, der Folgendes umfasst:
- das Verbinden sowohl des ersten Eingangs (14) als auch des zweiten Eingangs (16) mit einem jeweiligen Anschluss einer Gleichstromquelle (4);
- das Steuern des Ausgangsschaltorgans (10), so dass es sich während eines vorbestimmten Magnetisierungszeitraums in einem Durchlasszustand befindet; und
- das Steuern des Wechselrichters (6), um während des Magnetisierungszeitraums den ersten Eingang (14) des Wechselrichters mit mindestens einem und höchstens N-1 Ausgang (Ausgängen) (18) des Wechselrichters (6) zu verbinden, die jeweils einen Magnetisierungsausgang bilden, und den zweiten Eingang (16) des Wechselrichters (6) von jedem Magnetisierungsausgang zu trennen, um so gleichzeitig in jede Wicklung (38), die mit einem jeweiligen Magnetisierungsausgang verbunden ist, einen elektrischen Strom einzuspeisen, um im Hohlraum (34) des Stators (30) ein Magnetfeld zu erzeugen, das dazu bestimmt ist, jeweils ein magnetisches Element (48) zu magnetisieren, wobei das Verfahren außerdem einen Schritt zur Erregung der rotierenden Maschine nach dem Magnetisierungsschritt umfasst und gleichzeitig umfasst:
- das Steuern des Ausgangsschaltorgans (10), so dass es sich in einem gesperrten Zustand befindet; und
- das Steuern des Wechselrichters (6) nach einer vorbestimmten Steuerungsart für den Wechselrichter, um im Zeitverlauf nacheinander jeden Ausgang (18) des Wechselrichters (6) mit dem ersten Eingang (14) und/oder dem zweiten Eingang (16) des Wechselrichters (6) zu verbinden, um so elektrischen Strom in die Wicklungen (38) des Stators (30) einzuspeisen, um im Hohlraum (34) des Stators (30) ein rotierendes Magnetfeld zu erzeugen, das dazu bestimmt ist, den Rotor (32) um die Rotationsachse (X-X) drehend anzutreiben.

7. Versorgungsverfahren nach Anspruch 6, welches außerdem im Magnetisierungsschritt umfasst:
- das Erfassen eines Magnetfelds, das vom Rotor (32) erzeugt wird; und
- die Wahl jedes Magnetisierungsausgangs in Abhängigkeit von dem erfassten Magnetfeld.

8. Kompressionsanordnung, die eine Vorrichtung zum Verdichten von Fluid und ein Antriebssystem nach einem der Ansprüche 1 bis 5 umfasst, wobei die Vorrichtung zum Verdichten von Fluid für ihren Antrieb mit dem Stator der rotierenden Maschine (8) des Antriebssystems (2) gekoppelt ist.

9. Kompressionsanordnung nach Anspruch 8, wobei die Vorrichtung zum Verdichten von Fluid ein Turbolader ist, der eine Turbine und einen Verdichter miteinander vereint, insbesondere für einen Verbrennungsmotor oder eine Mikrogasturbine.

## Claims

1. Drive system (2) comprising an inverter (6), an electric rotating machine (8) and a control device (12), the inverter (6) comprising a first input (14), a second input (16) and N outputs (18), each of the first input (14) and the second input (16) being intended to be connected to a respective terminal of a DC source (4), each output (18) being associated with a respective electrical phase, N being a natural number greater than or equal to two,
the rotating machine (8) comprising a stator (30) and a rotor (32) that is rotatable, relative to the stator (30), about an axis of rotation (X-X), the stator (30) comprising N windings (38), each winding (38) comprising an input (40) and an output (42), the input (40) of each winding (38) being connected to a corresponding output (18) of the inverter (6), the outputs (42) of the windings (38) of the stator (30) being connected at a common point (44),
the drive system (2) being **characterized in that** it further comprises an output switching member (10) connected between the common point (44) and the second input (16) of the inverter (6),
the rotor (32) comprising at least one magnetic element (48) made of a material of adjustable magnetization, in particular of soft or semi-hard ferromagnetic material, the control device (12) being configured to, simultaneously, during a magnetization step of each magnetic element (48) of the rotor (32):
- control the output switching member (10) so that it is in an on state for a predetermined magnetization time interval; and
- control the inverter (6) to, for the magnetization time interval, connect the first input (14) of the inverter (6) to at least one and at most N-1 output(s) (18) of the inverter (6), each forming a magnetization output, and disconnect the second input (16) of the inverter from each magnetization output (18), said control device (12) being further configured to perform the magnetization step prior to a step of exciting the rotating machine, the control device (12) being configured to, during the excitation step, simultaneously:
- control the output switching member (10) so that it is in an off state; and
- control the inverter (6) according to a predetermined inverter control law to connect, successively over time, each output (18) of the inverter (6) to the first input (14) and/or the second input (16) of the inverter (6).

2. Drive system (2) according to Claim 1, further comprising a load (52) connected in series between the output switching member (10) and the second input (16) of the inverter (6).

3. Drive system (2) according to Claim 1 or 2, wherein the duration of the magnetization time interval depends on the material of adjustable magnetization and/or the number of magnetization outputs (18).

4. Drive system (2) according to Claim 3 when dependent on Claim 2, wherein the duration of the magnetization time interval further depends on the impedance of the load (52).

5. Drive system (2) according to any one of Claims 1 to 4, wherein the control device (12) is further configured to, during the magnetization step:
- detect a magnetic field generated by the rotor (32);
- choose each magnetization output on the basis of the detected magnetic field.

6. Method of supplying power to an electric rotating machine (8) by means of an inverter (6), the inverter (6) comprising a first input (14), a second input (16) and N outputs (18), each output (18) being associated with a respective electrical phase, N being a natural number greater than or equal to two,
the rotating machine (8) comprising a stator (30) and a rotor (32) that is arranged in a cavity (34) of the stator (30) and is rotatable, relative to the stator (30), about an axis of rotation (X-X),
the stator (30) comprising N windings (38), each winding (38) comprising an input (40) and an output (42), the input (40) of each winding (38) being connected to a corresponding output (18) of the inverter (6), the outputs (42) of the windings (38) being connected at a common point (44),
the rotor (32) comprising at least one magnetic element (48) made of a material of adjustable magnetization, in particular of soft or semi-hard ferromagnetic material, an output switching member (10) being connected between the common point (44) and the second input (16) of the inverter (6),
the power supply method comprising a step of magnetizing each magnetic element (48) of the rotor (32), comprising:
- connecting each of the first input (14) and the second input (16) to a respective terminal of a DC source (4) ;
- controlling the output switching member (10) so that it is in an on state for a predetermined magnetization time interval; and
- controlling the inverter (6) to, for the magnetization time interval, connect the first input (14) of the inverter to at least one and at most N-1 output(s) (18) of the inverter (6), each forming a magnetization output, and disconnect the second input (16) of the inverter (6) from each magnetization output, so as to simultaneously inject, into each winding (38) connected to a respective magnetization output, an electric current in order to generate, in the cavity (34) of the stator (30), a magnetic field intended to magnetize each magnetic element (48), said method further comprising a step of exciting the rotating machine subsequent to the magnetization step, and comprising simultaneously:
- controlling the output switching member (10) so that it is in an off state; and
- controlling the inverter (6) according to a predetermined inverter control law to connect, successively over time, each output (18) of the inverter (6) to the first input (14) and/or the second input (16) of the inverter (6), so as to inject electric current into the windings (38) of the stator (30) in order to generate, in the cavity (34) of the stator (30), a rotating magnetic field intended to drive the rotor (32) in rotation about the axis of rotation (X-X).

7. Power supply method according to Claim 6, further comprising, during the magnetization step:
- detecting a magnetic field generated by the rotor (32); and
- choosing each magnetization output on the basis of the detected magnetic field.

8. Compression assembly comprising a fluid compression device and a drive system according to any one of Claims 1 to 5, the fluid compression device being coupled to the stator of the rotating machine (8) of the drive system (2) in order to be driven.

9. Compression assembly according to Claim 8, wherein said fluid compression device is a turbocharger combining a turbine and a compressor, in particular for an internal combustion engine, or a microturbine.
